# EUROPÄISCHE PATENTANMELDUNG

(11) **EP 3 258 225 A1**
(43) Veröffentlichungstag der Anmeldung: **20.12.2017**
(21) Anmeldenummer: 16174476.8
(22) Anmeldetag: 14.06.2016
(51) Int. Cl.: G01F 23/296, G01N 11/16

(54) **VIBRATIONSGRENZSCHALTERANORDNUNG UND VERFAHREN ZUM BETRIEB EINER VIBRATIONSGRENZSCHALTERANORDNUNG**

(71) Anmelder: VEGA Grieshaber KG, 77709 Wolfach (DE)
(72) Erfinder: Allgaier, Volker, 77716 Haslach i. K. (DE); Fehrenbach, Dominik, 77716 Haslach (DE)
(74) Vertreter: Westphal, Mussgnug & Partner Patentanwälte mbB

(57) **Zusammenfassung**

Bereitgestellt wird eine Vibrationsgrenzschalteranordnung (10,20,30,40) mit, einem Schwingkörper (13,23,33,43) zur Überwachung des Füllstands eines Füllguts, einer Schwingungsanregungseinrichtung (12,22,32) oder einer Schwingungsanregungs- und Schwingungsempfangseinrichtung (42) zur Erzeugung eines den Schwingkörper (13,23,33,43) zum Schwingen anregenden Anregungssignals in Abhängigkeit von einem Steuersignal, einer Steuereinrichtung (11,21,31,41) zum Bereitstellen des Steuersignals, und einer Auswerteeinrichtung (15,25,35,45) zur Ermittlung und/oder Analyse einer Schwingungsfrequenz des Schwingkörpers (13,23,33,43), bei der die Vibrationsgrenzschalteranordnung (10,20,30,40) ferner ein Mittel zum Regeln der Schwingungsamplitude des Schwingkörpers (13,23,33,43) in Abhängigkeit von der Viskosität des Füllguts aufweist und Verfahren zum Betrieb einer Vibrationsgrenzschalteranordnung (10,20,30,40) bei dem beim Betrieb der Vibrationsgrenzschalteranordnung (10,20,30,40) eine Anpassung des Steuersignals an die Viskosität des Füllguts, dessen Grenzstand überwacht wird, vorgenommen wird, so dass die Schwingungsamplitude des Schwingkörpers (13,23,33,43) in einem bevorzugten Arbeitsbereich liegt.

## Beschreibung

Vibrationsgrenzschalteranordnungen und Verfahren zu deren Betrieb sind beispielsweise aus der EP 2 592 397 A1 bekannt. Bei diesen Anordnungen wird zur Überwachung einer Schaltbedingung die Änderung der Resonanzfrequenz eines zu Schwingungen angeregten Schwingkörpers, z.B. eines Stabs oder einer Gabel, genutzt, insbesondere eine Änderung der Resonanzfrequenz, die sich beim Eintauchen des zur Schwingung angeregten Körpers in ein Füllgut, insbesondere eine Flüssigkeit, ergibt. Diese Frequenzänderung ist insbesondere von der Dichte des Füllguts abhängig, so dass eine Anpassung der Schaltbedingung an diese Eigenschaft des Füllguts notwendig ist.

In der Praxis zeigt sich, dass auch nach einer Anpassung der Schaltbedingung an die Dichte des Füllguts ein einwandfreies Funktionieren der Vibrationsgrenzschalteranordnung noch nicht vorausgesetzt werden kann. Die Aufgabe der Erfindung besteht daher darin, eine Vibrationsgrenzschalteranordnung und ein Verfahren zum Betrieb einer Vibrationsgrenzschalteranordnung anzugeben, die einen universelleren Einsatz erlauben.

Diese Aufgabe wird gelöst durch eine Vibrationsgrenzschalteranordnung mit den Merkmalen des Anspruchs 1 und ein Verfahren zum Betrieb einer Vibrationsgrenzschalteranordnung mit den Merkmalen des Anspruchs 6. Vorteilhafte Weiterbildungen der Erfindung sind Gegenstand der jeweils abhängigen Ansprüche.

Eine wesentliche Erkenntnis, die zu der Erfindung geführt hat liegt darin, dass ein Teil der Probleme bekannter Vibrationsgrenzschalteranordnungen daraus resultiert, dass die Schwingungsamplitude nicht adäquat an die Viskosität des Füllguts angepasst ist. Bislang war man lediglich davon ausgegangen, dass durch die Eigenschaften -insbesondere die maximale Amplitude- des Antriebs des Schwingkörpers, also der Schwingungserregungseinrichtungen, eine maximale Viskosität des Füllguts, das mit dieser Vibrationsgrenzschalteranordnung überwacht werden kann, vorgegeben war. Es hat sich aber überraschenderweise herausgestellt dass eine zu große Schwingungsamplitude des Schwingkörpers in Füllgütern mit niedriger Viskosität eine mechanische Übersteuerung und/oder eine Anregung des Füllguts mit sich bringen kann, die die Messergebnisse negativ beeinträchtigen kann.

Dementsprechend weist eine erfindungsgemäße Vibrationsgrenzschalteranordnung einen Schwingkörper zur Überwachung des Füllstands eines Füllguts auf, der insbesondere als Gabel oder Stab ausgeführt sein kann. Sie weist ferner eine Schwingungsanregungseinrichtung zur Erzeugung eines den Schwingkörper zum Schwingen anregenden Anregungssignals in Abhängigkeit von einem Steuersignal, das an die Schwingungsanregungseinrichtung angelegt wird, auf. In der Praxis haben sich als Schwingungsanregungseinrichtung insbesondere Piezo-Elemente bewährt, bei denen als Steuersignal ein elektrisches, an das Piezo-Element angelegtes Signal dient, und deren Anregungssignal dann die mechanische bzw. geometrische, als Folge des inversen piezoelektrischen Effekts auftretende Verformung ist. Je nach Konfiguration der Vorrichtung kann insbesondere ein solches Piezo-Element auch als eine Schwingungsanregungs- und Schwingungsempfangseinrichtung benutzt werden. Dies ist insbesondere möglich, wenn das Steuersignal nicht ständig am Piezo-Element anliegt und stattdessen in Zeiten, in denen das Steuersignal nicht anliegt, die durch die Schwingungen des Schwingkörpers mittels des piezoleketrischen Effekts erzeugten elektrischen Signale für eine Weiterverarbeitung und insbesondere eine Auswertung des Schwingungsverhaltens durch weitere elektronische Baugruppen bereitgestellt werden.

Ferner weist die Vibrationsgrenzschalteranordnung eine Steuereinrichtung zum Bereitstellen des Steuersignals und eine Auswerteeinrichtung zur Ermittlung und/oder Analyse einer Schwingungsfrequenz des Schwingkörpers auf bekannte Weise auf. Selbstverständlich ist es möglich, diese beiden Funktionen auch in eine gemeinsame Steuer- und Auswerteeinrichtung zu integrieren.

Erfindungswesentlich ist dabei, dass die Vibrationsgrenzschalteranordnung ferner ein Mittel zum Regeln der Schwingungsamplitude des Schwingkörpers in Abhängigkeit von der Viskosität des Füllguts aufweist.

In einer besonders einfachen Ausführungsform der Erfindung kann das Mittel zum Regeln der Amplitude des Schwingkörpers in Abhängigkeit von der Viskosität des Füllguts ein Auswahlschalter mit mehreren Schaltpositionen, die unterschiedlichen Füllgütern und/oder unterschiedlichen Viskositätswerten zugeordnet sind, sein. Dies setzt voraus, dass das Füllgut oder zumindest die Viskosität des Füllguts bekannt ist, so dass der Benutzer der Vibrationsgrenzschalteranordnung eine geeignete Schaltposition auswählen kann. Die Steuereinrichtung ist dann so eingerichtet, dass sie an die Schwingungsanregungseinrichtung in Abhängigkeit von der Schaltposition, auf die der Auswahlschalter jeweils eingestellt ist, ein unterschiedliches Steuersignal anlegt, so dass der Schwingkörper durch unterschiedliche Anregungssignale zu Schwingungen mit unterschiedlicher Amplitude angeregt wird.

Im einfachsten Fall, in dem als Schwingungsanregungseinrichtung ein Piezo-Element (nachfolgend auch als Sende-Piezo-Element bezeichnet) dient, kann also einfach die Amplitude bzw. Amplitudenspannung eines an die Schwingungsanregungseinrichtung angelegten elektrischen Signals in Abhängigkeit von der Schaltposition verändert werden, was zu einer entsprechenden Änderung der durch den inversen piezoelektrischen Effekt bedingten Verformung des Piezo-Elements und somit des Anregungssignals führt. Dies ist beispielsweise dadurch realisierbar, dass die Steuereinrichtung einen einstellbaren Sendeverstärker umfasst.

Wie das Steuersignal in Abhängigkeit von der Viskosität zu variieren ist, um ein optimales Ergebnis zu erreichen, wird zweckmäßigerweise in einer Versuchsserie ermittelt. Die dabei erhaltene Kennlinie kann dann z.B. als Lookup-Tabelle in der Steuereinrichtung hinterlegt werden, um so eine Korrelation zwischen Schaltposition des Auswahlschalters und optimalem Steuersignal zu ermöglichen.

Insbesondere für Füllgüter, deren Viskosität stark von den aktuellen Umgebungsbedingungen, z.B. der Temperatur, abhängig sind, ist es aber vorteilhaft, die Anpassung der Schwingungsamplitude des Schwingkörpers an die tatsächlichen Ist-Bedingungen anzupassen. Dies kann erreicht werden, wenn das Mittel zum Regeln der Amplitude des die Schwingung des Schwingkörpers anregenden Anregungssignals in Abhängigkeit von der Viskosität des Füllguts ein Mittel zur Überwachung und/oder Auswertung der Schwingungsamplitude des Schwingkörpers aufweist und dass die Steuereinrichtung so eingerichtet ist, dass sie an die Schwingungsanregungseinrichtung in Abhängigkeit von dem Ergebnis der Überwachung und/oder Auswertung der Schwingungsamplitude, ein unterschiedliches Steuersignal anlegt, so dass der Schwingkörper durch unterschiedliche Anregungssignale zu Schwingungen mit unterschiedlicher Amplitude angeregt wird.

In einer ersten Variante dieser Weiterbildung wird dies dadurch erreicht, dass eine Komparatorbaugruppe zum Vergleich der von dem Mittel zur Überwachung und/oder Auswertung der Schwingungsamplitude des Schwingkörpers mit einem Sollwert vorhanden ist und dass die Steuereinrichtung eingerichtet ist, um das Steuersignal an das Ergebnis dieses Vergleichs anzupassen. Eine solche Komparatorbaugruppe kann entweder als Bestandteil der Steuereinrichtung oder als Bestandteil der Auswerteeinrichtung oder als eine separate Baugruppe realisiert werden.

Ganz konkret kann dazu das Mittel zur Überwachung und/oder Auswertung der Schwingungsamplitude des Schwingköpers ebenfalls als Piezo-Element (nachfolgend auch als Empfangs-Piezo-Element bezeichnet wird) ausgebildet sein, das durch die Schwingung des Schwingkörpers deformiert wird und somit als Folge des piezoelektrischen Effekts ein elektrisches Signal bereitstellt, das z.B. mit einem Empfangsverstärker nachverstärkt und dann von der Steuerelektronik mit einem Soll-Empfangssignal, das einen gewünschten Arbeitsbereich des Schwingkörpers repräsentiert und z.B. experimentell vorab ermittelt worden sein kann, verglichen wird. Das Ergebnis dieses Vergleichs wird dann von der Steuerelektronik verwendet, um unmittelbar das Steuersignal nachzuregeln.

In einer zweiten Variante dieser Weiterbildung ist eine Analysatorbaugruppe zum Ermitteln der Viskosität des Füllguts aus der Abklingkurve des Schwingköpers vorhanden und dass die Steuereinrichtung zur Anpassung des Steuersignals an die Viskosität des Füllguts in Abhängigkeit von dem so ermittelten Viskositätswert eingerichtet ist.

Um die Abklingkurve des Schwingkörpers analysieren zu können, wird vorzugsweise, insbesondere periodisch, das Anregungssignal unterbrochen, beispielsweise durch einen Unterbrecherschalter, und die Abklingkurve des Schwingkörpers gemessen, beispielsweise durch ein Piezo-Element, das die Schwingungen durch den piezoelektrischen Effekt in ein elektrisches Signal umwandelt, das mit einem optionalen Empfangsverstärker verstärkt wird und dann auf bekannte Art hinsichtlich Frequenz- und Amplitudenverhalten, insbesondere hinsichtlich des Abklingens der Schwingungsamplitude durch die Analysatorbaugruppe, die entweder als Bestandteil der Steuereinrichtung oder als Bestandteil der Auswerteeinrichtung oder als eine separate Baugruppe realisiert werden kann, analysiert wird. Dies kann mit Mitteln der elektronischen Datenverarbeitung, insbesondere ohne Eingriff eines Benutzers, geschehen, beispielsweise durch eine Anpassung einer vom Parameter Viskosität abhängigen Abklingverlaufskurve an den gemessenen Verlauf der Abklingkurve.

Diese zweite Variante hat den Vorteil, dass zwingend lediglich ein Piezo-Element benötigt wird, das zeitweilig als Schwingungsanregungseinrichtung und zeitweilig als Mittel zur Überwachung der Schwingungsamplitude des Schwingkörpers genutzt wird.

Das erfindungsgemäße Verfahren zum Betrieb einer Vibrationsgrenzschalteranordnung weist wie bekannte Verfahren und in bekannter Weise durchführbar die Schritte Erzeugen eines Steuersignals zur Ansteuerung einer Schwingungsanregungseinrichtung durch eine Steuereinrichtung, Erzeugen eines Anregungssignals für einen Schwingkörper zur Anregung des Schwingkörpers zu Schwingungen in Abhängigkeit von dem Steuersignal durch eine Schwingungsanregungseinrichtung, Auswertung des Schwingungsverhaltens des Schwingkörpers zur Ermittlung und Analyse einer Schwingungsfrequenz des Schwingkörpers auf.

Erfindungswesentlich ist, dass bei dem Betrieb der Vibrationsgrenzschalteranordnung ferner eine Anpassung des Steuersignals an die Viskosität des Füllguts, dessen Grenzstand überwacht wird, vorgenommen wird, so dass die Schwingungsamplitude des Schwingkörpers in einem bevorzugten Arbeitsbereich liegt. Dabei ist anzumerken, dass wegen des dominanten Einflusses der Viskosität auf die mit dem zu einem gegebenen Steuersignal hervorgerufenen Anregungssignal für den Schwingkörper erzeugte Schwingung des Schwingkörpers und insbesondere deren Schwingungsamplitude die Viskosität aus der Schwingungsamplitude, auf die sich der Schwingkörper bei einem gegebenen Anregungssignal einschwingt, bestimmt werden kann. Durch das Arbeiten in dem bevorzugten Arbeitsbereich wird die Zuverlässigkeit des Betriebs der Vibrationsgrenzschalteranordnung signifikant erhöht.

In einer bevorzugten Ausgestaltung des Verfahrens weist es ferner den Schritt des Ermittelns des bevorzugten Arbeitsbereichs des Schwingkörpers und eines Steuersignals, mit dem die Schwingungsanregungseinrichtung angesteuert werden muss, um den Schwingkörper durch das von ihr erzeugte Anregungssignal zu Schwingungen mit einer Schwingungsamplitude in diesem bevorzugten Arbeitsbereich anzuregen in Abhängigkeit von der Viskosität auf. Der bevorzugte Arbeitsbereich liegt an dem Punkt, an dem die gemessene Schwingungsamplitude gerade noch nicht in der mechanischen Sättigung liegt. Messtechnisch findet man diesen Punkt, in dem man die Sendespannung solange erhöht, bis sich die gemessen Schwingungsamplitude nicht mehr erhöht.

Bei der Verwendung von Piezo-Elementen als Schwingungsanregungseinrichtung ist der für die Auswahl des passenden Steuersignals relevante Parameter die Amplitudenspannung des periodischen elektrischen Signals mit dem das Piezo-Element angesteuert wird.

In einer Weiterbildung des Verfahrens wird dann der ermittelte bevorzugte Arbeitsbereich und/oder das ermittelte Steuersignal in Abhängigkeit von der Viskosität als Look-up-table oder Kennlinie hinterlegt.

Eine Möglichkeit zur Realisierung des Verfahrens zur Anpassung des Steuersignals besteht darin, dass das Verfahren den Schritt des Einstellens eines Füllguts oder der Viskosität eines Füllguts an einem Auswahlschalter aufweist. Dies ist relativ einfach realisierbar.

Eine andere Möglichkeit zur Realisierung des Verfahrens zur Anpassung des Steuersignals besteht darin, dass das Verfahren zur Anpassung des Steuersignals den Schritt des Bestimmens einer aktuellen Schwingungsamplitude des Schwingkörpers aufweist, dass ein Vergleich zwischen der aktuellen Schwingungsamplitude und dem bevorzugten Arbeitsbereich vorgenommen wird und dass das Steuersignal in Abhängigkeit vom Ergebnis dieses Vergleichs nachgeregelt wird. Dies erlaubt eine Anpassung an die jeweils aktuell herrschenden Betriebsbedingungen und ist beispielsweise dann vorteilhaft, wenn das Füllgut eine temperaturabhängige Viskosität aufweist.

Eine dritte Möglichkeit zur Realisierung des Verfahrens zur Anpassung des Steuersignals besteht darin, dass das Verfahren zur Anpassung des Steuersignals den Schritt des Bestimmens einer aktuellen Viskosität des Füllguts und eine Anpassung des Steuersignals an einen für diesen Viskositätswert in einem Look-up-table oder als Kennlinie hinterlegten Wert vorgenommen wird. Dies erlaubt ebenfalls eine Anpassung an die jeweils aktuell herrschenden Betriebsbedingungen und ist beispielsweise dann vorteilhaft, wenn das Füllgut eine temperaturabhängige Viskosität aufweist.

Bei der zweiten und dritten Möglichkeit ist es möglich, dass bei der Bestimmung der aktuellen Schwingungsamplitude des Schwingkörpers und/oder der aktuellen Viskosität des Füllguts das Steuersignal zeitweilig, insbesondere periodisch unterbrochen wird und die aktuelle Schwingungsamplitude des Schwingkörpers und/oder die aktuelle Viskosität des Füllguts aus der Abklingkurve des Schwingkörpers ermittelt wird. Dies kann beispielsweise mit einem Unterbrecherschalter geschehen, der von der Steuereinrichtung angesteuert wird. Die Schwingungsanregungseinrichtung wird dann als Schwingungsempfangseinrichtung genutzt, z.B. setzt ein Piezoelement die durch Schwingungen des Schwingkörpers auf das Piezoelement wirkenden mechanischen Deformationen in ein elektrisches Signal um, das der Auswerteeinheit, die bevorzugt einen Eingangsverstärker aufweist, zugeführt wird. Dies hat den Vorteil, dass nur ein Piezoelement vorgesehen werden muss.

Die Erfindung wird nachfolgend anhand von Figuren näher erläutert. Es zeigen:
- Fig.1:: Ein schematisch dargestelltes erstes Ausführungsbeispiel einer Vibrationsgrenzschalteranordnung;
- Fig.2:: ein schematisch dargestelltes zweites Ausführungsbeispiel einer Vibrationsgrenzschalteranordnung;
- Fig.3:: ein schematisch dargestelltes drittes Ausführungsbeispiel einer Vibrationsgrenzschalteranordnung;
- Fig.4:: ein schematisch dargestelltes viertes Ausführungsbeispiel einer Vibrationsgrenzschalteranordnung;
- Fig.5:: ein Beispiel einer Kennlinie, die angibt, welche Auswahl des Parameters Sendespannung für einen bestimmten Schwingkörper und eine bestimmte Schwingungsanregungseinrichtung bei welcher Viskosität zum Betrieb im bevorzugten Arbeitsbereich führt; und
- Fig.6:: zwei Beispiele für Abklingkurven derselben Schwingungsanregungseinrichtung bei Verwendung in Füllgütern mit unterschiedlicher Viskosität.

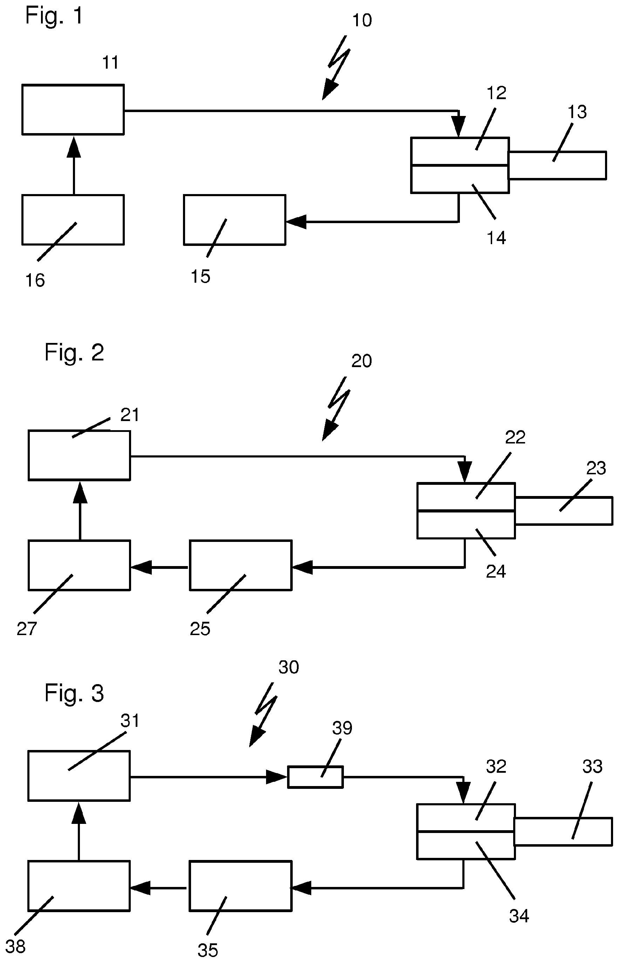

Die Pfeile in den Figuren 1 bis 4 symbolisieren jeweils eine Signalkommunikation zwischen entsprechenden Bauteilen, die im Regelfall über eine elektrische Verbindung in Form eines Kabels hergestellt wird, aber auch drahtlos realisierbar sein kann.

Figur 1 zeigt ein schematisch dargestelltes erstes Ausführungsbeispiel einer Vibrationsgrenzschalteranordnung 10. Sie weist einer Steuereinrichtung 11 auf, deren Steuersignal, eine sich periodisch ändernde Spannung mit einer maximalen Amplitude, an eine als Sendepiezo ausgeführte Schwingungsanregungseinrichtung 12 weitergeleitet wird. Als Reaktion auf dieses Steuersignal gibt die Schwingungsanregungseinrichtung 12 ein Anregungssignal ab, das einen Schwingungskörper 13 in Schwingungen versetzt. Zur Analyse dieser Schwingungen werden diese durch ein als Empfangspiezo ausgeführtes Mittel zur Überwachung der Schwingungsamplitude 14 aufgenommen, in ein elektrisches Signal umgewandelt und -in der Regel mit einem zwischen geschalteten oder integrierten Empfangsverstärker verstärkteiner Auswerteeinrichtung 15 zugeführt, die insbesondere aus dem zeitlichen Verlauf der Schwingungsamplitude in bekannter Weise die Schwingungsfrequenz ermittelt und bei Detektion einer Änderung der Schwingungsfrequenz die Vibrationsgrenzschalteranordnung 10 schaltet.

Durch einen Auswahlschalter 16 kann dabei das Steuersignal, das von der Steuereinrichtung 11 abgegeben wird, insbesondere hinsichtlich seiner Spannungsamplitude beeinflusst werden, beispielsweise indem unterschiedlichen Schaltpositionen des Auswahlschalters 16 eine unterschiedliche Verstärkung durch einen Sendeverstärker zugeordnet wird.

Das in Figur 2 schematisch dargestellte zweite Ausführungsbeispiel einer Vibrationsgrenzschalteranordnung 20 weist ebenfalls eine Steuereinrichtung 21, eine als Sendepiezo ausgeführte Schwingungsanregungseinrichtung 22, einen Schwingkörper 23, ein als Empfangspiezo ausgeführtes Mittel zur Überwachung der Schwingungsamplitude des Schwingkörpers 24 und eine Auswerteeinrichtung 25 auf, die in derselben Weise zusammenwirken wie die entsprechenden Komponenten der Vibrationsgrenzschalteranordnung 10.

Der Unterschied zwischen den Ausführungsbeispielen besteht darin, dass hier von der Auswerteeinrichtung 25 ein zur Schwingungsamplitude korrespondierendes elektrisches Signal an eine Komparatorbaugruppe 27 übergeben wird, mit der überprüft wird, ob die durch die Auswerteeinrichtung 25 bestimmte Schwingungsamplitude in dem bevorzugten Arbeitsbereich für den Schwingkörper 24 liegt. In Abhängigkeit vom Ergebnis dieser Überprüfung kann dann das Steuersignal von der Steuereinrichtung 21 angepasst werden, also z.B. die Spannungsamplitude des Steuersignals erhöht werden, wenn die Schwingungsamplitude zu niedrig liegt oder verringert werden, wenn die Schwingungsamplitude zu hoch liegt.

Das in Figur 3 schematisch dargestellte dritte Ausführungsbeispiel einer Vibrationsgrenzschalteranordnung 30 weist ebenfalls eine Steuereinrichtung 31, eine als Sendepiezo ausgeführte Schwingungsanregungseinrichtung 32, einen Schwingkörper 33, ein als Empfangspiezo ausgeführtes Mittel zur Überwachung der Schwingungsamplitude des Schwingkörpers 34 und eine Auswerteeinrichtung 35 auf, die in derselben Weise zusammenwirken wie die entsprechenden Komponenten der Vibrationsgrenzschalteranordnung 10.

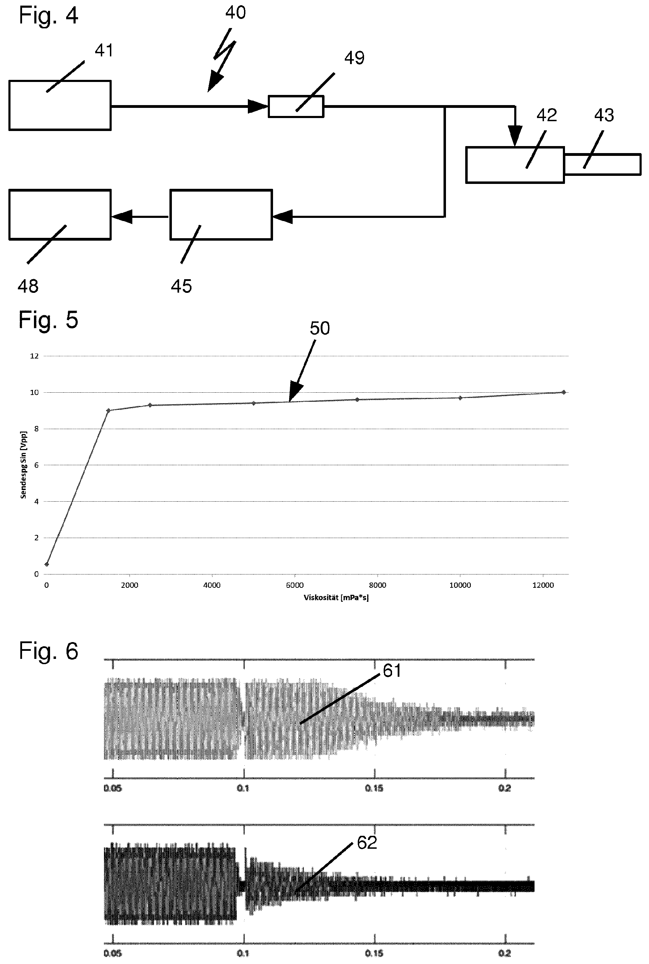

Ein Unterschied besteht aber darin, dass hier zusätzlich zwischen der Steuereinrichtung 31 und der Schwingungsanregungseinrichtung 32 ein Unterbrecherschalter 39 angeordnet ist, mit dem -bevorzugt periodisch- das Steuersignal unterbrochen werden kann. Wenn dies geschieht, führt die Überwachung der Schwingungsamplitude durch das als Empfangspiezo ausgeführte Mittel zur Überwachung der Schwingungsamplitude des Schwingkörpers 34 zur Aufzeichnung des Abklingverhaltens des Schwingkörpers 33, das exemplarisch in Figur 6 im rechten Teil der oberen Darstellung als Abklingkurve 61 bei geringerer Viskosität bzw. im rechten Teil der unteren Darstellung als Abklingkurve 62 bei höherer Viskosität dargestellt ist.

Die Auswerteeinrichtung 35 ist dann so eingerichtet, dass sie entweder eine Analysatorbaugruppe 38 aufweist oder mit einer solchen Analysatorbaugruppe 38 in Signalkommunikation steht, die zusätzlich zu der ohnehin durch die Auswerteeinrichtung 35 bereitgestellten Frequenzinformation aus der überwachten Schwingungsamplitude, genauer gesagt aus der Abklingkurve Informationen über die Viskosität des Füllguts ableitet. Dies kann z.B. durch Messung der Zeit, die für eine bestimmte Schwächung des Amplitudensignals, beispielsweise seinen Abfall auf 30% seines Ausgangswerts, benötigt wird oder eine Anpassung einer vom Parameter Viskosität abhängigen Modellkurve, die eine Einhüllende des gemessenen Amplitudenverlaufs darstellt oder durch den Vergleich mit zuvor bestimmten experimentellen Daten erfolgen.

Diese Information wird dann an die Steuereinrichtung 31 weitergeleitet, so dass in Abhängigkeit von diesem Viskositätswert das Steuersignal angepasst werden kann. Insbesondere kann dies mit einer beispielsweise in einem Speicher der Steuereinrichtung 31 hinterlegten Kennlinie 50, wie sie in Figur 5 dargestellt ist, erfolgen. Diese Kennlinie, die z.B. durch Testmessungen des Schwingungsverhaltens des Schwingkörpers 33 bei Kontakt mit Füllgut bekannter Viskosität und Bestimmung der Sendespannungsamplitude, die zum Betrieb des Schwingkörpers im bevorzugten Arbeitsbereich führt ermittelt werden kann, gibt unmittelbar an, welche Spannungsamplitude bei einer gegebenen Viskosität benötigt wird und erlaubt somit eine Auswahl einer entsprechenden Einstellung eines Sendeverstärkers.

Das in Figur 4 schematisch dargestellte vierte Ausführungsbeispiel einer Vibrationsgrenzschalteranordnung 40 weist wie das dritte Ausführungsbeispiel einer Vibrationsgrenzschalteranordnung 30 ebenfalls eine Steuereinrichtung 41, einen Unterbrecherschalter 49, einen Schwingkörper 43, eine Auswerteeinrichtung 45 und eine Analysatorbaugruppe 48 auf.

Ein Unterschied besteht hier darin, dass nun nur eine gemeinsame Schwingungsanregungs- und Schwingungsempfangseinrichtung 42 durch ein einzelnes Piezoelement gebildet wird, die bei geschlossenem Unterbrecherschalter 49 als Schwingungsanregungseinrichtung in gleicher Weise wie die Schwingungsanregungseinrichtung 32 bei der Vibrationsgrenzschalteranordnung 30 aus Figur 3, bei geöffnetem Unterbrecherschalter 49 aber als Mittel zur Überwachung der Schwingungsamplitude des Schwingkörpers dient und dann in gleicher Weise wie das entsprechende Mittel zur Überwachung der Schwingungsamplitude des Schwingkörpers 34 bei der Vibrationsgrenzschalteranordnung 30 gemäß Figur 3. Ansonsten wirken die Komponenten in derselben Weise zusammen wie die entsprechenden Komponenten der Vibrationsgrenzschalteranordnung 30 aus Figur 3.

### Bezugszeichenliste

- 10,20,30,40: Vibrationsgrenzschalteranordnung
- 11,21,31,41: Steuereinrichtung
- 12,22,32: Schwingungsanregungseinrichtung
- 13,23,33,43: Schwingkörper
- 14,24,34: Mittel zur Überwachung der Schwingungsamplitude des Schwingkörpers
- 15,25,35,45: Auswerteeinrichtung
- 16: Auswahlschalter
- 27: Komparatorbaugruppe
- 38,48: Analysatorbaugruppe
- 39,49: Unterbrecherschalter
- 42: Schwingungsanregungs- und Schwingungsempfangseinrichtung
- 50: Kennlinie
- 61,62: Abklingkurven

## Patentansprüche

1. Vibrationsgrenzschalteranordnung (10,20,30,40) mit, einem Schwingkörper (13,23,33,43) zur Überwachung des Füllstands eines Füllguts,
einer Schwingungsanregungseinrichtung (12,22,32) oder einer Schwingungsanregungs- und Schwingungsempfangseinrichtung (42) zur Erzeugung eines den Schwingkörper (13,23,33,43) zum Schwingen anregenden Anregungssignals in Abhängigkeit von einem Steuersignal,
einer Steuereinrichtung (11,21,31,41) zum Bereitstellen des Steuersignals, und
einer Auswerteeinrichtung (15,25,35,45) zur Ermittlung und/oder Analyse einer Schwingungsfrequenz des Schwingkörpers (13,23,33,43),
**dadurch gekennzeichnet, dass** die Vibrationsgrenzschalteranordnung (10,20,30,40) ferner ein Mittel zum Regeln der Schwingungsamplitude des Schwingkörpers (13,23,33,43) in Abhängigkeit von der Viskosität des Füllguts aufweist.

2. Vibrationsgrenzschalteranordnung (10) nach Anspruch 1, **dadurch gekennzeichnet, dass** das Mittel zum Regeln der Amplitude des Schwingkörpers (13) in Abhängigkeit von der Viskosität des Füllguts ein Auswahlschalter (16) mit mehreren Schaltpositionen, die unterschiedlichen Füllgütern und/oder unterschiedlichen Viskositätswerten zugeordnet sind, ist und dass die Steuereinrichtung (11) so eingerichtet ist, dass sie an die Schwingungsanregungseinrichtung (12) in Abhängigkeit von der Schaltposition, auf die der Auswahlschalter (16) jeweils eingestellt ist, ein unterschiedliches Steuersignal anlegt, so dass der Schwingkörper (13) durch unterschiedliche Anregungssignale zu Schwingungen mit unterschiedlicher Amplitude angeregt wird.

3. Vibrationsgrenzschalteranordnung (20,30,40) nach Anspruch 1,
**dadurch gekennzeichnet, dass** das Mittel zum Regeln der Amplitude des die Schwingung des Schwingkörpers (23,33,43) anregenden Anregungssignals in Abhängigkeit von der Viskosität des Füllguts ein Mittel zur Überwachung und/oder Auswertung der Schwingungsamplitude des Schwingkörpers (24,34,42) aufweist und dass die Steuereinrichtung (21,31,41) so eingerichtet ist, dass sie an die Schwingungsanregungseinrichtung (22,32,42) in Abhängigkeit von dem Ergebnis der Überwachung und/oder Auswertung der Schwingungsamplitude, ein unterschiedliches Steuersignal anlegt, so dass der Schwingkörper (23,33,43) durch unterschiedliche Anregungssignale zu Schwingungen mit unterschiedlicher Amplitude angeregt wird.

4. Vibrationsgrenzschalteranordnung (20) nach Anspruch 3, **dadurch gekennzeichnet, dass** eine Komparatorbaugruppe (27) zum Vergleich der von dem Mittel zur Überwachung und/oder Auswertung der Schwingungsamplitude des Schwingkörpers (24) mit einem Sollwert vorhanden ist und dass die Steuereinrichtung (21) eingerichtet ist, um das Steuersignal an das Ergebnis dieses Vergleichs anzupassen.

5. Vibrationsgrenzschalteranordnung (30,40) nach Anspruch 3 oder 4,
**dadurch gekennzeichnet, dass** eine Analysatorbaugruppe (38,48) zum Ermitteln der Viskosität des Füllguts aus der Abklingkurve (60,61) des Schwingköpers (33,43) vorhanden ist und dass die Steuereinrichtung (31,41) zur Anpassung des Steuersignals an die Viskosität des Füllguts in Abhängigkeit von dem so ermittelten Viskositätswert eingerichtet ist.

6. Verfahren zum Betrieb einer Vibrationsgrenzschalteranordnung (10,20,30,40) mit den Schritten
Erzeugen eines Steuersignals zur Ansteuerung einer Schwingungsanregungseinrichtung (12,22,32,42) durch eine Steuereinrichtung (11,21,31,41),
Erzeugen eines Anregungssignals für einen Schwingkörper (13,23,33,43) zur Anregung des Schwingkörpers (13,23,33,43) zu Schwingungen in Abhängigkeit von dem Steuersignal durch die Schwingungsanregungseinrichtung (12,22,32,42), Auswertung des Schwingungsverhaltens des Schwingkörpers (13,23,33,43) zur Ermittlung und Analyse einer Schwingungsfrequenz des Schwingkörpers (13,23,33,43),
**dadurch gekennzeichnet, dass** bei dem Betrieb der Vibrationsgrenzschalteranordnung (10,20,30,40) ferner eine Anpassung des Steuersignals an die Viskosität des Füllguts, dessen Grenzstand überwacht wird, vorgenommen wird, so dass die Schwingungsamplitude des Schwingkörpers (13,23,33,43) in einem bevorzugten Arbeitsbereich liegt.

7. Verfahren nach Anspruch 6,
**dadurch gekennzeichnet, dass** das Verfahren den Schritt des Ermittelns des bevorzugten Arbeitsbereichs des Schwingkörpers (13,23,33,43) und eines Steuersignals, mit dem die Schwingungsanregungseinrichtung (12, 22,32,42) angesteuert werden muss, um den Schwingkörper (13,23,33,43) durch das von ihr erzeugte Anregungssignal zu Schwingungen mit einer Schwingungsamplitude in diesem bevorzugten Arbeitsbereich anzuregen, in Abhängigkeit von der Viskosität aufweist.

8. Verfahren nach Anspruch 7,
**dadurch gekennzeichnet, dass** der ermittelte bevorzugte Arbeitsbereich und/oder das ermittelte Steuersignal in Abhängigkeit von der Viskosität als Look-up-table oder Kennlinie (50) hinterlegt wird.

9. Verfahren nach einem der Ansprüche 6 bis 8,
**dadurch gekennzeichnet, dass** das Verfahren zur Anpassung des Steuersignals den Schritt des Einstellens eines Füllguts oder der Viskosität eines Füllguts an einem Auswahlschalter (16) aufweist.

10. Verfahren nach einem der Ansprüche 6 bis 8,
**dadurch gekennzeichnet, dass** das Verfahren zur Anpassung des Steuersignals den Schritt des Bestimmens einer aktuellen Schwingungsamplitude des Schwingkörpers (22) aufweist, dass ein Vergleich zwischen der aktuellen Schwingungsamplitude und dem bevorzugten Arbeitsbereich vorgenommen wird und dass das Steuersignal in Abhängigkeit vom Ergebnis dieses Vergleichs nachgeregelt wird.

11. Verfahren nach Anspruch 8,
**dadurch gekennzeichnet, dass** das Verfahren zur Anpassung des Steuersignals den Schritt des Bestimmens einer aktuellen Viskosität des Füllguts aufweist und dass eine Anpassung des Steuersignals an einen für diesen Viskositätswert in einem Look-up-table oder als Kennlinie (50) hinterlegten Wert vorgenommen wird.

12. Verfahren nach Anspruch 10 oder 11,
**dadurch gekennzeichnet, dass** bei der Bestimmung der aktuellen Schwingungsamplitude des Schwingkörpers (33,43) und/oder der aktuellen Viskosität des Füllguts das Steuersignal zeitweilig unterbrochen wird und die aktuelle Schwingungsamplitude des Schwingkörpers (33,43) und/oder die aktuelle Viskosität des Füllguts aus der Abklingkurve (61,62) des Schwingkörpers ermittelt wird.
